# EUROPEAN PATENT SPECIFICATION

(11) **EP 2 101 559 B1**
(45) Date of publication and mention of the grant of the patent: **19.04.2017**
(21) Application number: 08705084.5
(22) Date of filing: 09.01.2008
(51) Int. Cl.: A01G 9/02, A01G 9/08

(54) **PLANT POT PROVIDED WITH A TAG, METHOD FOR ATTACHING SUCH A TAG, AS WELL AS A METHOD FOR CULTIVATING PLANTS**
PFLANZENTOPF MIT MARKIERUNG, VERFAHREN ZUR ANBRINGUNG EINER SOLCHEN MARKIERUNG SOWIE VERFAHREN ZUR KULTIVIERUNG VON PFLANZEN
BAC À PLANTES POURVU D'UNE ÉTIQUETTE, PROCÉDÉ DE FIXATION DE CETTE ÉTIQUETTE, AINSI QUE PROCÉDÉ PERMETTANT DE CULTIVER DES PLANTES

(30) Priority: 12.01.2007 NL 2000432
(43) Date of publication of application: 23.09.2009
(73) Proprietor: E. Van Zanten Holding B.V., 2676 BD Maasdijk (NL)
(72) Inventor: VAN ZANTEN, Evert, NL-2676 BD Maasdijk (NL); DIJKSHOORN, Lars, NL-3141 BB Maassluis (NL)
(74) Representative: Nederlandsch Octrooibureau
(86) International application number: PCT/NL2008/050015
(87) International publication number: WO 2008/085045

(56) References cited:
- JP-A- 2006 101 739
- US-A- 6 164 537

## Description

The present invention relates to a plant pot, in particular a plant pot for use in cultivating plants, comprising a side wall and bottom which delimit an interior space for substrate which is open at the top, in which the bottom has a bottom side which is turned away from the interior space, and in which the plant pot is provided with a tag.

A plant pot of this type is known from US 6,134,832. This document discloses a plant pot having a bottom and a wall which has an interior space for substrate which is open at the top. The wall is provided with a thickened edge at the top, around the access to the accommodation space. At strategic locations, this edge is provided with slots in which tags which are not described in any more detail are provided containing identification and/or other information. These tags are thus attached on the top side of the plant pot, at the edge thereof. Although this may be practical for consumer use, it is not practical for cultivating plants when the grower wants to read this information. After all, plant leaves will in many cases obstruct the view, the plant pot will in each case first have to be positioned such that the tag is in the field of view, and usually many plant pots are grouped close together, so that the view of the edge of a plant pot is obstructed by the surrounding plants.

US 6,164,537 also discloses plant pots provided with a tag attached on their top side.

Furthermore, it is generally known to place labels, that is to say tags attached to a card or stick, in the substrate. Although such labels may be practical for consumer use, they are not practical for cultivating plants when the grower wants to read this information. In this case as well, the plant and surrounding plant pots containing plants obstruct the view. In addition, labels obstruct the light, which hampers the growth of the plants.

JP 2006.101739 discloses a tag designed push-in card (to be pushed into the substrate) which is provided with a so-called RFID element (RFID meaning Radio Frequency IDentification). Such RFID elements are generally known per se. The properties of RFID elements are that a) data can be written onto them wirelessly from a distance-that is to say they can be provided with data - and/or b) they can be read out wirelessly from a distance. Although the RFID element according to the abstract of this publication allows the use of a management system for cultivating plants - which may offer considerable advantages when cultivating plants -, the RFID element provided on a push-in card has various drawbacks attached to it. These drawbacks include inter alia the following:
- An RFID element provided on a push-in card will, in use, be situated between the plants and thus be less accessible for a read/write unit. In order to ensure reliable reading out of and in particular reliable writing to an RFID element, interference with and disturbance of neighboring RFID elements has to be prevented.
- When the card comprising the RFID element is pushed into the substrate, the plant or the root structure thereof may be damaged. In the case of some plants, the installation of the push-in card is hardly possible, if at all.
- The push-in card takes light away from the plant.
- Pushing the card with the RFID element into the substrate cannot easily be automated.
- When the plant dies, the push-in card has to be removed as the push-in card cannot be disposed of together with the remains of the substrate and plant, due to waste separation rules.
- RFID elements are relatively expensive compared to the price of many plants. Use of an RFID element with such plants leads to an unacceptable increase in the cost price if the RFID element cannot be re-used.
- As the RFID element is inbetween the plants, removal thereof for re-use will be complicated. The card comprising the RFID element has to be located, the plant has to be cleared away, and a gripper will take the card and pull it out of the substrate. Whether this is carried out manually or in automated fashion (which is very difficult), the plant can easily be damaged in the process and the operation is relatively time-consuming.

Fitting an RFID element to the edge of a plant pot is associated with similar drawbacks.

It is an object of the present invention to provide a plant pot which is provided with a tag which can be read and written electronically in a simple and reliable manner so that use thereof in a highly automated cultivation management system is possible.

This object is achieved according to the invention by providing a plant pot, in particular a plant pot for use in cultivating plants, comprising a side wall and bottom which delimit an interior space for substrate which is open at the top, in which the bottom has a bottom side which is turned away from the interior space, and in which the plant pot is provided with a tag, in which the plant pot is characterized by the fact that the tag can is readable and/or writeable electronically; and in that the tag is arranged on the bottom side of the bottom. Preferably the tag is both readable and writeable electronically.

By attaching the electronically writeable and readable tag, such as a tag comprising an RFID element, to the bottom side of the bottom of a plant pot, said tag can be approached from below by means of a read and/or write unit while preventing contact with the plants above the substrate. The read and/or write unit can be accommodated in or on the surface on which the plant pots are situated in a simple manner. By moving the read and/or write unit below the surface, the plant pots can be accessed individually in order for the tag to be read and/or written. It is also possible to move the surface past the read and/or write unit in order to access the labels of the various plant pots separately, or the plant pots can be placed on a conveyor belt and be conveyed past the read and/or write unit. Reference may be made for example to EP-A-668,012 entitled "Method and installation for the cultivation of plants on a conveyor belt" in the name of Damsight for a system in which plant pots are situated on conveyor belts. Such conveyor belts can not only be used for the cultivation itself, but can also be used as a conveying system for conveying plant pots throughout the nursery, such as from the cultivation space to a treatment station and, if desired, vice versa (such as a treatment station for sorting, feeding, packaging, etc.), to a further cultivation space, etc. With a system of this type, it is highly advantageous for managing the cultivation and the logistics when moving the plant pots to be able to provide information on the plant pots and to be able to read this information at certain desired locations. For this purpose, one or more read and/or write units can easily be provided below the conveyor belt or, if desired, next to it.

According to a further embodiment, the tag is removeable from the plant pot. Thus, the tag can be re-used on another plant pot, which is advantageous with a view to the costs related to cultivating plants. Removal may in this case sometimes result in damage to the plant pot, in particular to the bottom. Although damage of the plant pot or bottom thereof is not preferable for aesthetic reasons, it is usually the case that such damage does not affect the plants and will not be visible when the plant pot is upright.

According to yet a further embodiment, the tag, viewed in relation to the bottom, is arranged in the center. This has many positioning advantages. It makes the positioning of a gripper for removal of the tag simple. It makes the positioning of a feeder for fitting the label simple. Positioning of a read and/or write unit, if desired very near, is thus made simple.

According to yet a further embodiment, the tag is attached to the bottom by means of a snap connection. A snap connection in a simple manner provides a reliable connection which does not open spontaneously. Furthermore, a snap connection can be produced in automated fashion in a simple manner by moving the plant pot and the tag with respect to one another with a certain force - in order to overcome the snap - until the connection snaps into place. Another advantage of a snap connection is the fact that it can also be released, albeit with the use of some force. With a view to re-use, that part of the snap connection which is on the tag will be more stiff and strong than the part of the snap connection which is on the plant pot.

In this case, it is of particular advantage if the snap connection is designed such that the tag can be attached to the bottom by placing the tag and the bottom side of the bottom against one another using a relative movement at right angles to the bottom side of the bottom. With such a snap connection, approaching the bottom with a feeder which carries the tag is simple and, in addition, it is simple to retain the plant pot while a snap connection is brought about. If the weight of the plant pot does not suffice yet, the plant pot can be retained in a simple manner by means of detaining elements which engage with, for example, the top edge of the plant pot.

In this case, it is furthermore advantageous if the tag is provided with at least one insertion part on which at least one snap lug or at least one snap cavity is provided. Such an insertion part may for example be a pin having a mushroom-like head at its free upper end, the edge of which forms a snap lug. If suitably dimensioned, the head can then be inserted into a hole which is usually already provided in the bottom side of a plant pot until it has penetrated the hole and engages on the bottom at the top of the bottom. If the material of the bottom of the plant pot is sufficiently flexible, as is the case with some conventional plant pots, it is also possible to provide a snap cavity instead of a snap lug, into which it can then engage with the edge of the hole in the bottom in order to retain the pin. Incidentally, both in the case of a snap lug and in the case of a snap cavity, if the material of the bottom of the plant pot is suitable, it is also conceivable that no hole is provided for the pin in the bottom beforehand, but that this hole is pierced by the pin when the tag is being attached.

According to a further embodiment, the tag is attached to the bottom by means of a pivot connection, such as a bayonet-type connection, optionally in combination with a snap connection. A pivot connection, such as a bayonet-type connection, can be produced and can also be detached in an automated fashion in a relatively simple manner. Furthermore, detaching can be carried out without any, or hardly any damage to the bottom. In order to prevent inadvertent automatic detachment, it is advantageous with a pivot connection, in particular with a bayonet-type connection, to use it in combination with a snap connection. The snap connection will in this case essentially act as a lock.

According to a further aspect, the present invention relates to a method for labeling a plant pot, in particular a plant pot for use in cultivating plants, in which the plant pot comprises a side wall and bottom which delimit an interior space for substrate which is open at the top, and in which the bottom has a bottom side which is turned away from the interior space, characterized in that the tag is attached to the bottom side of the bottom, and in which the tag can be read and/or written electronically. Further embodiments of this method are described in claims 10-18. The advantages of this method as well as further embodiments thereof will be clear from the explanation given above in connection with the plant pot according to the invention.

According to yet a further aspect, the present invention relates to a method for cultivating plants in plant pots, in which each plant pot comprises a side wall and bottom which delimit an interior space for substrate which is open at the top, and in which the bottom has a bottom side which is turned away from the interior space, which method is characterized by the fact that:
a) tags are attached to the plant pots on the bottom side of the bottom which can be read and/or written electronically;
b) data are written electronically on each tag relating to the plant which is cultivated in the associated plant pot; and
c) the data are read out electronically while the tag is attached to the plant pot.
The significant advantage of this method is the fact that it is thus possible to improve the cultivation management greatly. The electronically writeable and readable tag on the bottom side makes it possible, for example, to track and trace the plant pots in a very reliable manner. If several plants are grown in a nursery and an order for a certain plant is received to supply a number of plants with flowers of a certain color, then it is very simple to locate this desired number of plants by means of a track and trace system (which are known per se) and to convey them to a delivery point, if desired in automated fashion. If other properties, such as size or number of flowers, are determined regularly during cultivation of the plants, it is possible to also take such details into account with the order.

In this case, it is advantageous if step b) is carried out in such a manner that said data comprise a unique identification in order to recognize each respective plant pot. Thus, it is possible to know the location of each individual plant pot in the nursery and/or other properties of the plant growing therein at any given moment.

According to a further embodiment, step b) is repeated once or several times during cultivation in order to modify or add data. Thus, it is possible to store all desired specific data in the plant pot itself. If the plant pot is then transferred from one nursery to another nursery, it will include its own unique data. The transfer of data from one management system to another is thus facilitated and very reliable.

According to a further embodiment, step c) is repeated once or several times during cultivation. Thus, it is possible to check if the data with respect to, for example, the location of the plant pots as stored in a management system are still up to date. When variations are found, corrections can be made to the management system. It has to be considered that the plant pots in a nursery may lose the location stored in the management system when they have, for example, fallen over and been placed back or for some reason have been moved manually.

According to a further embodiment, a number of plant pots (out of the entirety of plant pots, even all the plant pots is possible) are conveyed over a conveyor belt in a row and standing upright past a read and/or write unit provided along the conveyor belt for electronically reading or writing the tags of these plant pots. As has been explained above in connection with a conveyor belt, this offers significant advantages, but it will be clear, however, that the conveyor belt in this case may also be of another kind than the conveyor belt type. The conveyor belt may, for example, also very well be a roller track or a chain track.

In order to minimize manipulation of the plant and to prevent substrate from falling out of the plant pot, it is advantageous according to the invention if the read and/or write unit is provided in such a manner that the plant pots, standing upright, are passed over the read and/or write unit.

Prior to or after conveying one of said plant pots past the read and/or write unit, said plant pot may be subjected to a treatment and the data obtained in the process may be stored. These data can then be stored in the label itself and/or, attributed to said specific plant pot, in a central data system.

With a view to reducing the cost price of the plant, it is advantageous if:
- the tags are removed from the plant pots when the cultivation has ended;
- these removed tags are attached to other plant pots.

The present invention will be described below in more detail with reference to a diagrammatically illustrated example, in which:
fig. 1 shows a diagrammatic cross section of a plant pot according to the invention;
fig. 2 shows detail II from fig. 1 on an enlarged scale; and
fig. 3 highly diagrammatically shows a conveyor track with plant pots according to the invention thereon.

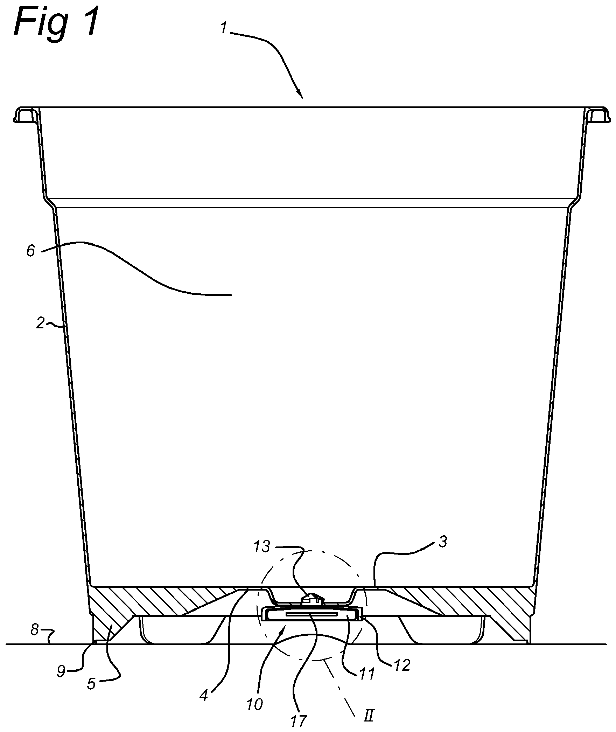

Fig. 1 shows a plant pot according to the invention. The plant pot 1 has a wall 2 and a bottom 3. The wall 2 and the bottom 3 delimit an interior space 6 for substrate (not shown) which is open at the top.

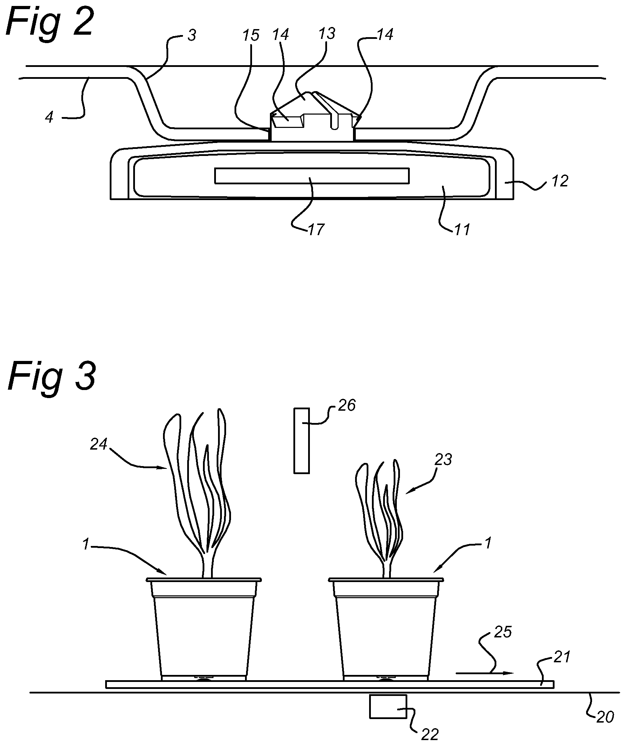

The substrate as such may be any known kind of substrate or any kind of substrate still to be conceived, such as sand, mineral wool, etc. During cultivation, a plant will grow in the substrate. Two plants are denoted with reference numerals 23 and 24 by way of example in fig. 3.

The bottom 3 has a top side which is turned towards the interior space 6 and a bottom side 4 which is turned away from the interior space. Under the bottom 3, reinforcement bodies 5 are provided which are known per se from the prior art. As is also known per se from the prior art, the bottom 3, or at least a part thereof, is at some distance above the surface 8 so that excess water can more easily drain away via holes (not shown) in the bottom 3 out of the plant pot.

A tag 10 is attached to the bottom on the bottom side 4 of the bottom 3. This tag 10 comprises a housing 12 in which a plaque 11 is accommodated in which an RFID element 17 is embedded.

The top side of the housing 12 of the tag 10 is provided with a short, relatively wide pin 13 with a pointed top. This pin is provided with three snap lugs 14 (see fig. 2), which are evenly distributed over the periphery of the pin 13. As can be seen in detail in fig. 2, the pin 13 is inserted so far into a hole 15 in the bottom 3 that the snap lugs 14 engage with the top surface of the bottom 3. In this manner, the tag is reliably attached to the underside of the bottom 3 of the plant pot. The tag 10 can be removed from the plant pot 1 again by grasping it and pulling it sufficiently hard. The tag 10 can then be attached to another plant pot.

Fig. 3 highly diagrammatically shows a conveyor track 20 over which a conveyor belt 21 runs which can be driven in the direction of arrow 25 (and if desired also in the reverse direction). Two plant pots 1 containing, in this example, various plants, or at least plants of different size, are situated on the conveyor belt 21. When passing the sensor 26, which is shown as an example of use, the height of the plant is determined. As soon as the plant then passes over the read and/or write unit 22, the tag 10 is read out and the height which was determined earlier is stored, attributed to this plant pot, in a data system and/or the height which was determined earlier is written to the tag (stored).

It should be noted that the term 'plant pot' in this application is by no means limited to cylindrical tapering plant pots, as illustrated in the attached drawings. The term plant pot is understood in a general sense to mean each container comprising a side wall and bottom which delimit an interior space for substrate which is open at the top (filled with substrate in use). Such a container (in this application referred to as plant pot) may also have a block-like or other shape. Many different kinds of containers of this type (referred to as plant pots in this application) having various names are known in the field of the cultivation of plants.

Preferably, the tag is according to the invention both readable and writeable electronically.

## Claims

1. A plant pot (1), in particular a plant pot for use in cultivating plants, comprising a side wall (2) and bottom (3) which delimit an interior space (6) for substrate which is open at the top, in which the bottom has a bottom side (4) which is turned away from the interior space, and in which the plant pot is provided with a tag (10), **characterized in that:** the tag is readable and/or writeable electronically, and the tag is arranged on the bottom side of the bottom.

2. The plant pot as claimed in claim 1, in which the tag comprises an RFID element.

3. The plant pot as claimed in one of the preceding claims, in which the tag, viewed in relation to the bottom, is arranged in the center.

4. The plant pot as claimed in one of the preceding claims, in which the tag can be removed from the plant pot.

5. The plant pot as claimed in one of the preceding claims, in which the tag is attached to the bottom by means of a snap connection.

6. The plant pot as claimed in claim 5, in which the snap connection is designed such that the tag can be attached to the bottom by placing the tag and the bottom side of the bottom against one another using a relative movement at right angles to the bottom side of the bottom.

7. The plant pot as claimed in claim 5 or 6, in which the tag is provided with at least one insertion part on which at least one snap lug or at least one snap cavity is provided.

8. The plant pot as claimed in claim 7, in which the bottom is provided with an opening, such as a hole, in which the insertion part is insertable in such a manner that the opening engages the snap lug or snap cavity, respectively, at its periphery.

9. The plant pot as claimed in one of claims 1-5, in which the tag is attached to the bottom by means of a pivot connection, such as a bayonet-type connection.

10. A method for labeling a plant pot (1) with a tag (10), in particular a plant pot for use in cultivating plants, in which the plant pot comprises a side wall (2) and bottom (3) which delimit an interior space (6) for substrate which is open at the top, and in which the bottom has a bottom side (4) which is turned away from the interior space, **characterized in that:** the tag is attached to the bottom side of the bottom, and the tag is readable and/or writeable electronically.

11. The method as claimed in claim 10, in which the tag comprises an RFID element.

12. The method as claimed in one of claims 10-11, in which the tag, viewed in relation to the bottom, is arranged in the center.

13. The method as claimed in one of claims 10-12, in which the tag is removable from the plant pot.

14. The method as claimed in one of claims 10-13, in which the tag is attached to the bottom by means of a snap connection.

15. The method as claimed in claim 14, in which the snap connection is designed such that the tag can be attached to the bottom by placing the tag and the bottom side of the bottom against one another using a relative movement at right angles to the bottom side of the bottom.

16. The method as claimed in claim 14 or 15, in which the tag is provided with at least one insertion part on which at least one snap lug or at least one snap cavity is provided.

17. The method as claimed in claim 16, in which the bottom is provided with an opening, such as a hole, in which the insertion part is insertable in such a manner that, during attachment of the tag, the opening engages the snap lug or snap cavity, respectively, at its periphery.

18. The method as claimed in one of claims 10-14, in which the tag is attached to the bottom by means of a pivot connection, such as a bayonet-type connection.

19. A method for cultivating plants (23,24) in plant pots (1), in which each plant pot comprises a side wall (2) and bottom (3) which delimit an interior space (6) for substrate which is open at the top, and in which the bottom has a bottom side (4) which is turned away from the interior space,
**characterized in that:**
a) tags are attached to the plant pots on the bottom side of the bottom which are readable and/or writeable electronically;
b) data are written electronically on each tag relating to the plant which is cultivated in the associated plant pot; and
c) the data are read out electronically while the tag is attached to the plant pot.

20. The method as claimed in claim 19, in which step b) is carried out in such a manner that said data comprise a unique identification in order to recognize each respective plant pot.

21. The method as claimed in one of claims 19-20, in which step b) is repeated once or several times during cultivation in order to modify or add data.

22. The method as claimed in one of claims 19-21, in which step c) is repeated once or several times during cultivation.

23. The method as claimed in one of claims 19-22, in which a number of plant pots are conveyed over a conveyor belt in a row and standing upright past a read and/or write unit provided along the conveyor belt for electronically reading or writing the tags of these plant pots.

24. The method as claimed in claim 23, in which the read and/or write unit is provided in such a manner that the plant pots, standing upright, are passed over the read and/or write unit.

25. The method as claimed in one of claims 23-24, in which, prior to conveying one of said plant pots past the read and/or write unit, said plant pot is subjected to a treatment and the data obtained in the process are stored.

26. The method as claimed in one of claims 19-25, in which:
• the tags are removed from the plant pots when the cultivation has ended;
• these removed tags are attached to other plant pots.

## Patentansprüche

1. Pflanztopf (1), insbesondere Pflanztopf zur Verwendung bei der Kultivierung von Pflanzen, umfassend eine Seitenwand (2) und einen Boden (3), die einen nach oben geöffneten Innenraum (6) für ein Substrat begrenzen, wobei der Boden eine Unterseite (4) aufweist, die vom Innenraum abgewandt ist und wobei der Pflanztopf mit einem Etikett (10) bereitgestellt ist,
**dadurch gekennzeichnet, dass:**
das Etikett elektronisch lesbar und/oder schreibbar ist; und
das Etikett auf der Unterseite des Bodens angeordnet ist.

2. Pflanztopf nach Anspruch 1, wobei das Etikett ein RFID-Element umfasst.

3. Pflanztopf nach einem der vorhergehenden Ansprüche, wobei das Etikett, in Relation zum Boden gesehen, im Zentrum angeordnet ist.

4. Pflanztopf nach einem der vorhergehenden Ansprüche, wobei das Etikett vom Pflanztopf entfernt werden kann.

5. Pflanztopf nach einem der vorhergehenden Ansprüche, wobei das Etikett mittels einer Schnappverbindung am Boden angebracht ist.

6. Pflanztopf nach Anspruch 5, wobei die Schnappverbindung derart ausgebildet ist, sodass das Etikett am Boden angebracht werden kann, indem das Etikett und die Unterseite des Bodens durch eine relative Bewegung in rechten Winkeln zur Unterseite des Bodens aneinander platziert werden.

7. Pflanztopf nach Anspruch 5 oder 6, wobei das Etikett mit mindestens einem Einführteil bereitgestellt wird, worauf mindestens eine Schnapplasche oder mindestens ein Schnapploch bereitgestellt ist.

8. Pflanztopf nach Anspruch 7, wobei der Boden mit einer Öffnung, wie einem Loch, bereitgestellt ist, in die der Einführteil einsetzbar ist, sodass die Schnapplasche oder das Schnapploch jeweils am Umfang der Öffnung einrasten.

9. Pflanztopf nach einem der Ansprüche 1 bis 5, wobei das Etikett am Boden angebracht ist mittels einer Drehverbindung, wie einer Bajonettverbindung.

10. Verfahren zum Etikettieren eines Pflanztopfs (1), insbesondere eines Pflanztopfs zur Verwendung bei der Kultivierung von Pflanzen, mit einem Etikett (10), wobei der Pflanztopf eine Seitenwand (2) und einen Boden (3) umfasst, die einen nach oben geöffneten Innenraum (6) für ein Substrat begrenzen, wobei der Boden eine Unterseite (4) aufweist, die vom Innenraum abgewandt ist,
**dadurch gekennzeichnet, dass:**
das Etikett an der Unterseite des Bodens angebracht ist, und
das Etikett elektronisch lesbar und/oder schreibbar ist.

11. Verfahren nach Anspruch 10, wobei das Etikett ein RFID-Element umfasst.

12. Verfahren nach einem der Ansprüche 10 - 11, wobei das Etikett, in Beziehung zum Boden gesehen, im Zentrum angeordnet ist.

13. Verfahren nach einem der Ansprüche 10 - 12, wobei das Etikett vom Pflanztopf entfernbar ist.

14. Verfahren nach einem der Ansprüche 10 - 13, wobei das Etikett am Boden mittels einer Schnappverbindung angebracht ist.

15. Verfahren nach Anspruch 14, wobei die Schnappverbindung derart ausgebildet ist, sodass das Etikett am Boden angebracht werden kann, indem das Etikett und die Unterseite des Bodens durch eine relative Bewegung in rechten Winkeln zur Unterseite des Bodens aneinander platziert werden.

16. Verfahren nach Anspruch 14 oder 15, wobei das Etikett mit mindestens einem Einführteil bereitgestellt wird, worauf mindestens eine Schnapplasche oder mindestens ein Schnapploch bereitgestellt ist.

17. Verfahren nach Anspruch 16, wobei der Boden mit einer Öffnung, wie einem Loch, bereitgestellt ist, in die der Einführteil einsetzbar ist, sodass während des Anbringens des Etiketts die Schnapplasche oder das Schnapploch jeweils am Umfang der Öffnung einrasten.

18. Verfahren nach einem der Ansprüche 10 - 14, wobei das Etikett am Boden mittels einer Drehverbindung, wie einer Bajonettverbindung, angebracht ist.

19. Verfahren zum Kultivieren von Pflanzen (23, 24) in Pflanztöpfen (1), wobei jeder Pflanztopf eine Seitenwand (2) und einen Boden (3) umfasst, die einen nach oben geöffneten Innenraum (6) für ein Substrat begrenzen, wobei der Boden eine Unterseite (4) aufweist, die von dem Innenraum abgewandt ist,
**dadurch gekennzeichnet, dass:**
a) Etiketten an den Pflanztöpfen an der Unterseite des Bodens angebracht werden, die elektronisch lesbar und/oder schreibbar sind;
b) Daten elektronisch auf jedes Etikett geschrieben werden, die in Beziehung zu der Pflanze stehen, die im jeweiligen Pflanztopf kultiviert wird; und
c) die Daten elektronisch ausgelesen werden, während das Etikett am Pflanztopf angebracht ist.
d)

20. Verfahren nach Anspruch 19, wobei Schritt b) derart ausgeführt wird, dass die Daten einen eindeutige Identifizierung umfassen, um jeden jeweiligen Pflanztopf zu erkennen.

21. Verfahren nach einem der Ansprüche 19 - 20, wobei Schritt b) ein- oder mehrfach während der Kultivierung durchgeführt wird, um die Daten zu modifizieren oder Daten hinzuzufügen.

22. Verfahren nach einem der Ansprüche 19 - 21, wobei Schritt c) ein- oder mehrfach während der Kultivierung wiederholt wird.

23. Verfahren nach einem der Ansprüche 19 - 22, wobei eine Anzahl der Pflanztöpfe über ein Förderband in einer Reihe und aufrechtstehend vorbei an eine Lese- und/oder Schreibeinheit, die entlang dem Förderband zum elektronischen Lesen oder Schreiben der Etiketten der Pflanztöpfe bereitgestellt ist, gefördert wird.

24. Verfahren nach Anspruch 23, wobei die Lese- und/oder Schreibeinheit derart bereitgestellt ist, dass die Pflanztöpfe aufrechtstehend über die Lese- und/oder Schreibeinheit geführt werden.

25. Verfahren nach einem der Ansprüche 23 - 24, wobei vor dem Fördern eines der Pflanztöpfe vorbei an der Lese- und/oder Schreibeinheit der Pflanztopf einer Behandlung unterzogen wird, und die Daten, die während des Prozesses erhalten werden, gespeichert werden.

26. Verfahren nach einem der Ansprüche 19 - 25, wobei:
- die Etiketten von den Pflanztöpfen entfernt werden, nachdem die Kultivierung beendet ist;
- die entfernten Etiketten an anderen Pflanztöpfen angebracht werden.

## Revendications

1. Pot à plante (1) en particulier un pot à plante destiné à être utilisé pour cultiver des plantes, comprenant une paroi latérale (2) et un fond (3) qui délimitent un espace intérieur (6) pour le substrat, qui est ouvert sur le dessus, dans lequel le fond à un côté inférieur (4) qui est détourné par rapport à l'espace intérieur, et dans lequel le pot à plante est prévu avec une étiquette (10),
**caractérisé en ce que** :
l'étiquette est lisible et/ou inscriptible électroniquement ; et
l'étiquette est agencée sur le côté inférieur du fond.

2. Pot à plante selon la revendication 1, dans lequel l'étiquette comprend un élément de RFID.

3. Pot à plante selon l'une des revendications précédentes, dans lequel l'étiquette, observée par rapport au fond, est agencée dans le centre.

4. Pot à plante selon l'une des revendications précédentes, dans lequel l'étiquette peut être retirée du pot à plante.

5. Pot à plante selon l'une des revendications précédentes, dans lequel l'étiquette est fixée au fond au moyen d'un raccordement par encliquetage.

6. Pot à plante selon la revendication 5, dans lequel le raccordement d'encliquetage est conçu de sorte que l'étiquette peut être fixée au fond en plaçant l'étiquette et le côté inférieur du fond l'un contre l'autre à l'aide d'un mouvement relatif en angle droit par rapport au côté inférieur du fond.

7. Pot à plante selon la revendication 5 ou 6, dans lequel l'étiquette est prévue avec au moins une partie d'insertion sur laquelle au moins une patte d'encliquetage ou au moins une cavité d'encliquetage est prévue.

8. Pot à plante selon la revendication 7, dans lequel le fond est prévu avec une ouverture telle qu'un trou, dans laquelle la partie d'insertion peut être insérée de sorte que l'ouverture met en prise la patte d'encliquetage ou la cavité d'encliquetage respectivement au niveau de sa périphérie.

9. Pot à plante selon l'une des revendications 1 à 5, dans lequel l'étiquette est fixée sur le fond au moyen d'un raccordement par pivot, tel qu'un raccordement de type à baïonnette.

10. Procédé pour étiqueter un pot à plante (1) avec une étiquette (10), en particulier un pot à plante destiné à être utilisé pour cultiver des plantes, dans lequel le pot à plante comprend une paroi latérale (2) et un fond (3) qui délimitent un espace intérieur (6) pour le substrat, qui est ouvert sur le dessus, et dans lequel le fond a un côté inférieur (4) qui est détourné par rapport à l'espace intérieur,
**caractérisé en ce que** :
l'étiquette est fixée sur le côté inférieur du fond, et l'étiquette est lisible et/ou inscriptible électroniquement.

11. Procédé selon la revendication 10, dans lequel l'étiquette comprend un élément de RFID.

12. Procédé selon l'une des revendications 10 à 11, dans lequel l'étiquette, observée par rapport au fond, est agencée dans le centre.

13. Procédé selon l'une des revendications 10 à 12, dans lequel l'étiquette peut être retirée du pot à plante.

14. Procédé selon l'une des revendications 10 à 13, dans lequel l'étiquette est fixée sur le fond au moyen d'un raccordement par encliquetage.

15. Procédé selon la revendication 14, dans lequel le raccordement par encliquetage est conçu de sorte que l'étiquette peut être fixée au fond en plaçant l'étiquette et le côté inférieur du fond l'un contre l'autre à l'aide d'un mouvement relatif en angle droit par rapport au côté inférieur du fond.

16. Procédé selon la revendication 14 ou 15, dans lequel l'étiquette est prévue avec au moins une partie d'insertion sur laquelle au moins une patte d'encliquetage ou au moins une cavité d'encliquetage est prévue.

17. Procédé selon la revendication 16, dans lequel le fond est prévu avec une ouverture telle qu'un trou, dans laquelle la partie d'insertion peut être insérée de sorte que pendant la fixation de l'étiquette, l'ouverture met en prise la patte d'encliquetage ou la cavité d'encliquetage, respectivement, au niveau de sa périphérie.

18. Procédé selon l'une des revendications 10 à 14, dans lequel l'étiquette est fixée sur le fond au moyen d'un raccordement par pivot, tel qu'un raccordement de type à baïonnette.

19. Procédé pour cultiver des plantes (23, 24) dans des pots à plante (1), dans lequel chaque pot à plante comprend une paroi latérale (2) et un fond (3) qui délimitent un espace intérieur (6) pour le substrat, qui est ouvert sur le dessus, et dans lequel le fond a un côté inférieur (4) qui est détourné par rapport à l'espace intérieur,
**caractérisé en ce que** :
a) les étiquettes sont fixées sur les pots à plante sur le côté inférieur du fond qui sont lisibles et/ou inscriptibles électroniquement ;
b) des données sont écrites électroniquement sur chaque étiquette par rapport à la plante qui est cultivée dans le pot à plante associé ; et
c) les données sont lues électroniquement alors que l'étiquette est fixée sur le pot à plante.

20. Procédé selon la revendication 19, dans lequel l'étape b) est réalisée de sorte que lesdites données comprennent une identification unique afin de reconnaître chaque pot à plante respectif.

21. Procédé selon l'une des revendications 19 à 20, dans lequel l'étape b) est répétée une ou plusieurs fois pendant la culture afin de modifier ou d'ajouter des données.

22. Procédé selon l'une des revendications 19 à 21, dans lequel l'étape c) est répétée une fois ou plusieurs fois pendant la culture.

23. Procédé selon l'une des revendications 19 à 22, dans lequel on transporte un certain nombre de pots à plante sur une courroie transporteuse dans une rangée et se tiennent debout au-delà d'une unité de lecture et/ou d'écriture prévue le long de la courroie transporteuse pour lire ou inscrire électroniquement les étiquettes de ces pots à plante.

24. Procédé selon la revendication 23, dans lequel l'unité de lecture et/ou d'écriture est prévue de sorte que les pots à plante, debout, passent sur l'unité de lecture et/ou d'écriture.

25. Procédé selon l'une des revendications 23 à 24, dans lequel, avant de transporter l'un desdits pots à plante au-delà de l'unité de lecture et/ou d'écriture, ledit pot à plante est soumis à un traitement et les données obtenues lors du traitement sont mémorisées.

26. Procédé selon l'une des revendications 19 à 25, dans lequel :
• les étiquettes sont retirées des pots à plante lorsque la culture est terminée ;
• ces étiquettes retirées sont fixées à d'autres pots à plante.
